# EUROPEAN PATENT APPLICATION

(11) **EP 1 616 804 A1**
(43) Date of publication of application: **18.01.2006**
(21) Application number: 04380089.5
(22) Date of filing: 20.04.2004
(51) Int. Cl.: B65D 21/08, B65D 21/02, F16D 65/00

(54) **Stackable container**

(71) Applicant: Eurobrakes B.V., 3113 AR Schiedam (NL)
(72) Inventor: Richter Caron, Andre, 3113 AR Schiedam (NL)
(74) Representative: González Ballesteros, Pedro

(57) **Abstract**

AUTO-STACKABLE CONDITIONER (1), comprised of a body (2) and a cover (3), the said cover (3), which comprises a shoulder in its top part (5) and at least one hole (6), superposes the said body (2) which is provided with a base. The said cover (3) has prominent extension (7) in its lateral outline, providing height variation of the said conditioner.

## Description

The present invention relates to a device applied to an auto-stackable conditioner for automotive parts, more specifically, for brake drums and discs, having the peculiarity of facilitating the vertical displacement of its cover, thus obtaining a diversity of settings in the cover height in relation to the bottom of the conditioner, providing functional improvement in the storage of the product.

Currently, the conditioners used by producers of brake drums and discs are all made of corrugated cardboard, presenting disadvantages such as conditioner low mechanical strength, which can cause tearing when handling or storing.

Another disadvantage is the need of a great number of stored conditioners as this kind of conditioner demands the acquisition of large lots to obtain cost reduction.

An additional disadvantage is the fact that the current conditioners do not protect the conditioned product from climatic variations due to its low resistance and easy degradation.

One of the biggest problems is the need of different sizes of conditioners to meet the demand for different sizes of brake drums and discs.

Observing the problems and disadvantages aforementioned, a conditioner was designed for automotive parts, more specifically for brake drums and discs, which main objective is to adjust itself to the different sizes of brake drums and discs in relation to the height of those parts, resulting in a conditioner with a telescopic cover.

Another object of the aforementioned invention is to obtain a conditioner of great mechanical strength, which material avoids both the wrinkling and the bursting of its structure.

One of the advantages of this invention is that the conditioner is auto-stackable, preventing brake drums and discs from falling either during transportation or when they are displayed.

Another advantage of this invention is that it is a conditioner of easy handling and easy conception.

An additional advantage of this invention is that it can be obtained at a lower cost if compared to the traditional ones.

The said invention has yet other advantages such as:

Reduction in the volume of transportation and storage area; standardization in one type of conditioner only.

Elimination of complementary components to stack the conditioners, object of the present invention as they already are stackable and resistant enough, and;

Protection of the brake drums and discs from climatic variations.

For the best definition of the invention, schematic figures are presented below. They show a particular execution of the invention which dimensions and proportions are not necessarily the real ones as the sole purpose of the figures is to didactically present the many aspects of the invention which protection coverage is defined by the scope of the enclosed claims only:

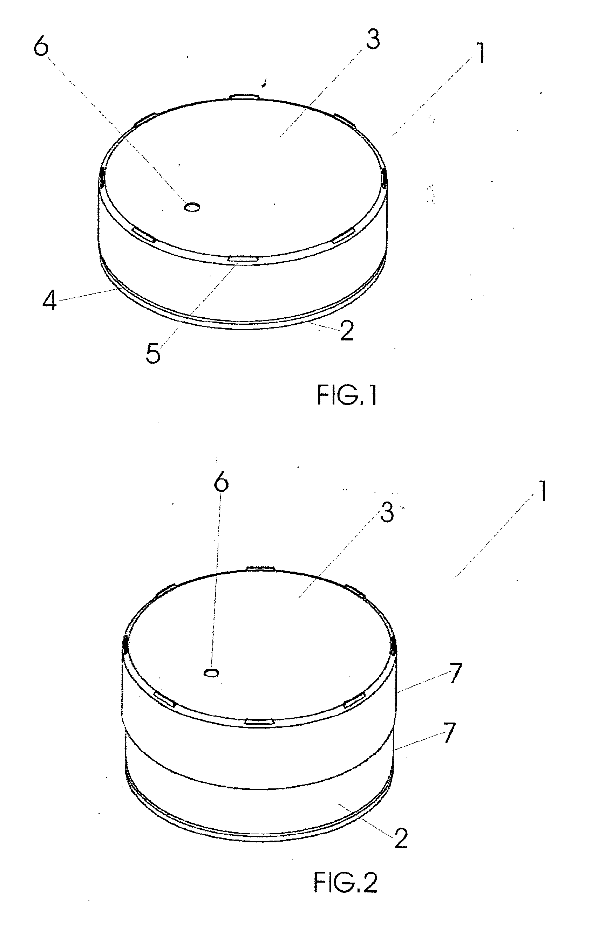

Fig. 1 - Top perspective view of the auto-stackable conditioner for automotive parts in its closing limit;
Fig. 2 - Top perspective view of the auto-stackable conditioner for automotive parts in its opening limit;

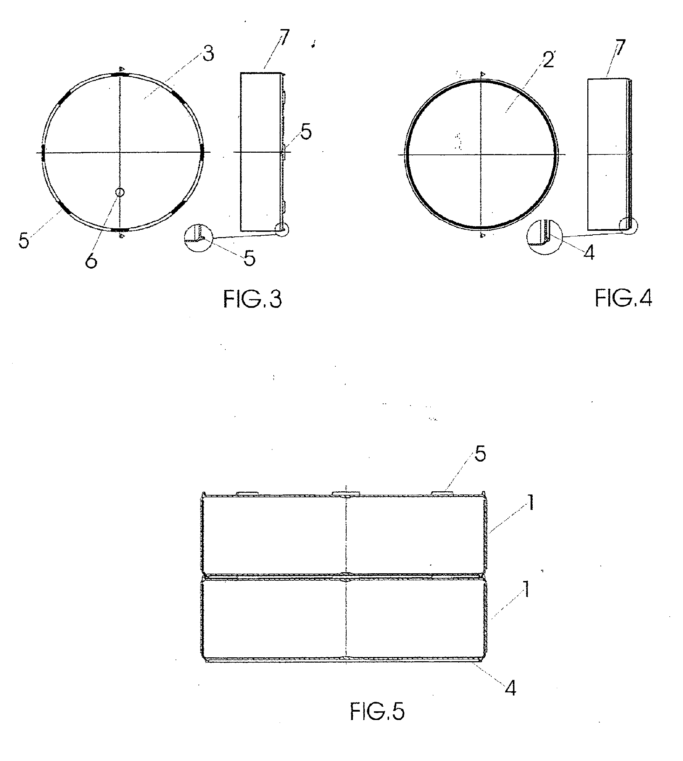

Fig. 3 - Top and side section view, with a detail of the top part of the cover of the auto-stackable conditioner for automotive parts.
Fig. 4 - Bottom and side section view, with a detail of the base of the body of the auto-stackable conditioner for automotive parts.
Fig. 5- Section view of the favorite stacking of two auto-stackable conditioners.

According to the figures above, the said invention presents an auto-stackable conditioner (1) for automotive parts, comprised by a body (2) and a cover (3). The said cover (3), comprising a shoulder in its top part (5) and at least one hole (6) for the relief of air resistance when of the opening and closing operation of the auto-stackable conditioner, superposes the said body (2) which is provided with a base.

The said body (2) and cover (3) have a prominent extension (7) in their lateral outline, with minimum reduction of the body diameter (2) in relation to the cover diameter (3), providing height telescopic variation of the said conditioner.

Figure 5 is the representation of auto-stackable conditioners (1) displayed one on top of the other, in an auto-stackable way, generating safety in the storing and transportation of automotive parts, more specifically, brake drums and discs (not illustrated) preventing them from occasional falls.

That auto-stacking is possible due to the reduction of the body (2) base (4) diameter, which fits the cover (3) shoulders (5).

The technical man will quickly observe from the description and the figures represented many ways to accomplish the invention without moving away from the scope of the claims enclosed.

## Claims

1. AUTO-STACKABLE CONDITIONER (1), comprised of a body (2) and a cover (3), **characterized by the fact that** the said cover (3), comprising a shoulder in its top part (5) and at least one hole (6), superposes the said body (2) which is provided with a base (4).

2. AUTO-STACKABLE CONDITIONER (1), according to claim 1, **characterized by the fact that** the said body (2) and cover (3) have a prominent extension (7) in their lateral outline, and reduction of the body diameter (2) in relation to the cover diameter (3), providing height telescopic variation of the said conditioner (1);

3. AUTO-STACKABLE CONDITIONER (1), according to claims 1 or 2, **characterized by the fact that** the said conditioner (1) is auto-stackable due to the reduction of the base diameter (4) so that shoulders (5) can fit in it.

## Amended claims

### Amended claims in accordance with Rule 86(2) EPC.

**1.** AUTO-STACKABLE CONTAINER (1), comprised of a body (2) and a cover (3), **characterized by the fact that** the said cover (3), comprising a shoulder in its top part (5) and at least one hole (6), superposes the said body (2) which is provided with a base (4).

**2.** AUTO-STACKABLE CONTAINER (1), according to claim 1, **characterized by the fact that** the said body (2) and cover (3) have a prominent extension (7) in their lateral outline, and reduction of the body diameter (2) in relation to the cover diameter (3), providing height telescopic variation of the said container (1);

**3.** AUTO-STACKABLE CONTAINER (1), according to claims 1 or 2, **characterized by the fact that** the said container (1) is auto-stackable due to the reduction of the base diameter (4) so that shoulders (5) can fit in it.
